# FASCICULE DE BREVET EUROPEEN

(11) **EP 1 712 858 B1**
(45) Date de publication et mention de la délivrance du brevet: **02.04.2008**
(21) Numéro de dépôt: 06300287.7
(22) Date de dépôt: 27.03.2006
(51) Int. Cl.: F25J 3/04

(54) **Procédé et installation de refroidissement de l'eau**
Verfahren und Anlage zum Kühlen von Wasser
Process and installation for cooling water

(30) Priorité: 08.04.2005 FR 0550907
(43) Date de publication de la demande: 18.10.2006
(73) Titulaire: L'AIR LIQUIDE, Société Anonyme pour l'Etude et l'Exploitation des Procédés Georges Claude, 75007 Paris (FR)
(72) Inventeur: Dubettier-Grenier, Richard, 94210, La Varenne Saint Hilaire (FR)
(74) Mandataire: Pittis, Olivier

(56) Documents cités:
- US-A- 4 639 257
- US-A- 5 505 050
- US-B1- 6 295 838

## Description

La présente invention est relative à un procédé et une installation de refroidissement d'eau selon le préambule des revendications 1 et 4 respectivement. Un tel procédé et une telle installation sont connus du US-A-6 295 838.

Il est connu de refroidir de l'eau par échange de chaleur et de matière dans des tours de refroidissement par échange de chaleur avec de l'air ou avec de l'azote résiduaire sec (voir US-A-6 295 838) provenant d'un appareil de séparation d'air.

La présente invention vise à utiliser un gaz sec provenant d'une unité cryogénique pour refroidir de l'eau.

Dans ce document, l'unité cryogénique est une unité où le gaz à séparer est refroidi à une température en dessous de -10°C et subit ensuite au moins une étape de condensation partielle. L'unité peut par exemple être un liquéfacteur ou un appareil de distillation.

Selon un objet de l'invention, il est prévu un procédé selon la revendication 1.

Selon d'autres caractéristiques facultatives :
- on soutire un gaz contenant du CO₂ et de la vapeur d'eau en tête de la tour et on envoie au moins une partie de l'eau refroidie dans la tour à un refroidisseur où elle refroidit le gaz appauvri en CO₂ en amont d'une turbine ou de l'air en amont d'un sécheur, l'air séché étant destiné à un compresseur pour fournir de l'air comprimé, éventuellement à un appareil de distillation ;
- le fluide riche en CO₂ provient d'une unité d'adsorption, on soutire un gaz contenant du CO₂ et de la vapeur d'eau en tête de la tour et on envoie au moins une partie de l'eau refroidie dans la tour à un refroidisseur où elle refroidit le gaz alimentant l'unité d'adsorption ou le gaz enrichi en CO₂ quittant l'unité d'adsorption ou après compression avant les sécheurs de l'unité cryogénique.

Selon un autre objet de l'invention, il est prévu un appareil selon la revendication 4.

Selon d'autres aspects de l'invention, il est prévu :
- des moyens pour envoyer au moins une partie de l'eau refroidie dans la tour à un refroidisseur où elle refroidit le gaz appauvri en CO₂ en amont d'une turbine ou de l'air en amont d'un sécheur, l'air séché étant destiné à un compresseur pour fournir de l'air comprimé, éventuellement à un appareil de distillation ;
- des moyens pour envoyer au moins une partie de l'eau refroidie dans la tour à un refroidisseur où elle refroidit le gaz alimentant une unité d'adsorption ou le gaz enrichi en CO₂ quittant une unité d'adsorption.

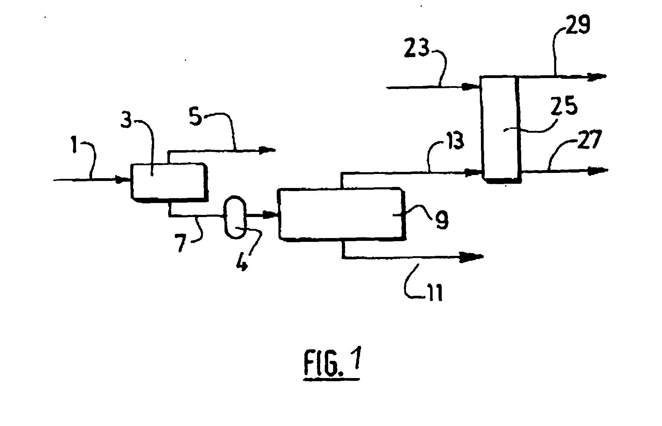

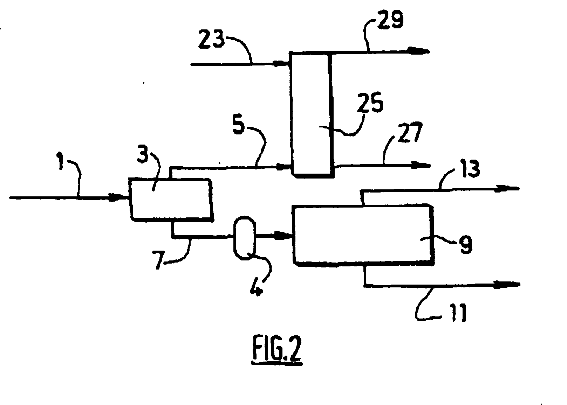

L'invention sera décrite en plus de détail en se référant aux figures. La Figure 1 est un dessin schématique illustrant un exemple de procédé selon l'invention. Un procédé selon la Figure 2 dans lequel tout ou une partie de débit 13 est envoyé à la tour de refrigération est aussi un example de procédé selon l'invention.

La Figure 1 montre une unité d'adsorption de type VPSA (ou VSA ou PSA) 3 alimentée par un gaz à traiter 1. Le gaz à traiter contient entre 10 et 60 % de CO₂, mélangé avec au moins un autre gaz pouvant être l'azote, le monoxyde de carbone, l'hydrogène, l'oxygène, le méthane, l'argon, la vapeur d'eau. Ce gaz est à une pression entre 1 et 10 bara.

L'unité 3 produit un gaz appauvri en CO₂ 5 et un gaz enrichi en CO₂ 7. Le gaz 7 enrichi en CO₂ contient entre 50 et 95 % de CO₂. Dans la Figure 1, l'unité d'adsorption est de type VPSA (ou VSA ou PSA) 3 comprenant entre autres :
- des adsorbeurs
- un système de vannes
- des pompes à vide (s'il s'agit d'un PSA)
   ainsi qu'éventuellement
- des pompes à vide (s'il s'agit d'un VPSA ou VSA)
- un compresseur du gaz à traiter 1
- une capacité de gaz enrichi en CO₂ 4
- une capacité de gaz appauvri en CO₂

Le gaz enrichi en CO₂ est séparé ultérieurement dans une unité cryogénique 9 opérant par au moins une étape de condensation partielle pour fournir un débit riche en CO₂ 15 et un débit pauvre en CO₂ 13.

Le gaz pauvre en CO₂ 13 sert à refroidir de l'eau, étant envoyé en cuve d'une tour de réfrigération 25 alimentée en tête par de l'eau 23. Cette tour de réfrigération contient des garnissages de type ondulé-croisé ou vrac (du type anneau par exemple) permettant l'échange de chaleur et de masse, de manière connue. De l'eau plus froide 27 est produite en cuve comme produit.

Le gaz appauvri en CO₂ humidifié 29 est extrait en haut de la tour 25.

La Figure 2 montre une unité d'adsorption de type VPSA (ou VSA ou PSA) 3 alimentée par un gaz à traiter 1. Le gaz à traiter contient entre 10 et 60 % de CO₂, mélangé avec au moins un autre gaz pouvant être l'azote, le monoxyde de carbone, l'hydrogène, l'oxygène, le méthane, l'argon, la vapeur d'eau. Ce gaz est à une pression entre 1 et 10 bara.

L'unité 3 produit un gaz appauvri en CO₂ 5 et un gaz enrichi en CO₂ 7. Le gaz 7 enrichi en CO₂ contient entre 50 et 95 % de CO₂. Dans la Figure 1,

l'unité d'adsorption est de type VPSA (ou VSA ou PSA) 3 comprenant entre autres :
- des adsorbeurs
- un système de vannes
   ainsi qu'éventuellement
- des pompes à vide (s'il s'agit d'un VPSA ou VSA)
- un compresseur du gaz à traiter 1
- une capacité de gaz enrichi en CO₂ 4
- une capacité de gaz appauvri en CO₂

Eventuellement le gaz enrichi en CO₂ peut être séparé ultérieurement dans une unité cryogénique 9 ou par un autre type de séparation pour fournir un débit riche en CO₂ 15 et un débit pauvre en CO₂ 13.

Le gaz appauvri en CO₂ 5 sert à refroidir de l'eau, étant envoyé en cuve d'une tour de réfrigération 25 alimentée en tête par de l'eau 23. Cette tour de réfrigération contient des garnissages de type ondulé-croisé ou vrac (du type anneau par exemple) permettant l'échange de chaleur et de masse, de manière connue. De l'eau plus froide 27 est produite en cuve comme produit.

Le gaz appauvri en CO₂ humidifié 29 est extrait en haut de la tour 25.

Dans l'exemple, l'unité d'adsorption est alimentée par un débit contenant au moins 50% mol. de CO₂ pour produire un débit enrichi en CO₂ . Or d'autres types d'unité d'adsorption peuvent alimenter la tour de refroidissement à condition que le gaz produit soit sec. Par exemple, l'unité 3 peut être remplacée par un VSA produisant de l'oxygène à partir de l'air où le gaz appauvri en oxygène sera le gaz 5 ou un PSA produisant de l'hydrogène où le gaz appauvri en hydrogène sera le gaz 5.

Evidemment les figures 1 et 2 peuvent être combinées en envoyant tout ou une partie des débits 5 et 13 à la tour de réfrigération.

## Revendications

1. Procédé de refroidissement d'eau dans lequel un débit d'eau (23) est refroidi dans une tour d'échange de matière et de chaleur (25) alimentée en cuve par un gaz sec (13) dans lequel on soutire de l'eau refroidie (27) en cuve de la tour, dans lequel le gaz sec est appauvri en CO₂ et **caractérisé en ce** le gaz sec provient d'une unité cryogénique (9) traitant un fluide riche en CO₂ (7) contenant plus de 50% mol. CO₂ en entrée.

2. Procédé selon la revendication 1 dans lequel on soutire un gaz (29) contenant du CO₂ et de la vapeur d'eau en tête de la tour et on envoie au moins une partie de l'eau refroidie (27) dans la tour à un refroidisseur où elle refroidit le gaz appauvri en CO₂ en amont d'une turbine ou de l'air en amont d'un sécheur, l'air séché étant destiné à un compresseur pour fournir de l'air comprimé, éventuellement à un appareil de distillation.

3. Procédé selon la revendication 1 dans lequel le fluide riche en CO₂ (7) provient d'une unité d'adsorption (3), on soutire un gaz (29) contenant du CO₂ et de la vapeur d'eau en tête de la tour et on envoie au moins une partie de l'eau (27) refroidie dans la tour à un refroidisseur où elle refroidit le gaz (1) alimentant l'unité d'adsorption ou le gaz (7) enrichi en CO₂ quittant l'unité d'adsorption ou après compression avant les sécheurs de l'unité cryogénique.

4. Appareil de refroidissement d'eau comprenant une tour d'échange de matière et de chaleur (25) alimentée en cuve par un gaz sec (13) et en tête par un débit d'eau à refroidir (23) et produisant de l'eau refroidie (27) en cuve ans lequel le gaz sec est appauvri en CO₂ et **caractérisé en ce** le gaz sec provient d'une unité cryogénique (9) traitant un fluide riche en CO₂ (7) contenant plus de 50% mol. CO₂ en entrée.

5. Appareil selon la revendication 4 comprenant des moyens pour envoyer au moins une partie de l'eau refroidie (27) dans la tour (25) à un refroidisseur où elle refroidit le gaz appauvri en CO₂ en amont d'une turbine ou de l'air en amont d'un sécheur, l'air séché étant destiné à un compresseur pour fournir de l'air comprimé, éventuellement à un appareil de distillation.

6. Appareil selon la revendication 4 ou 5 comprenant des moyens pour envoyer au moins une partie de l'eau refroidie (27) dans la tour à un refroidisseur où elle refroidit le gaz (1) alimentant une unité d'adsorption (3) ou le gaz enrichi en CO₂ (7) quittant une unité d'adsorption.

## Claims

1. Method of cooling water in which a flow of water (23) is cooled in a tower (25) for mass and heat exchange, which is fed at the bottom with a dry gas (13) and from which cooled water (27) is withdrawn from the bottom of the tower, in which method the dry gas is depleted in CO₂ and **characterized in that** the dry gas comes from a cryogenic unit (9) that treats as input a CO₂-rich fluid (7) containing more than 50 mol% CO₂.

2. Method according to Claim 1, in which a gas (29) containing CO₂ and water vapour is withdrawn from the top of the tower and at least some of the water (27) cooled in the tower is sent to a chiller where it cools the CO₂-depleted gas upstream of a turbine or air upstream of a dryer, the dried air being intended for a compressor so as to deliver compressed air, possibly to a distillation apparatus.

3. Method according to Claim 1, in which the CO₂-rich fluid (7) comes from an adsorption unit (3), a gas (29) containing CO₂ and water vapour is withdrawn from the top of the tower, and at least some of the water (27) cooled in the tower is sent to a chiller where it cools the gas (1) feeding the adsorption unit or the CO₂-enriched gas (7) leaving the adsorption unit or after compression before the dryers of the cryogenic unit.

4. Water cooling apparatus comprising a tower (25) for mass and heat exchange, which is fed at the bottom with a dry gas (13) and at the top with a flow of water (23) to be cooled and which produces cooled water (27) at the bottom, in which the dry gas is depleted in CO₂ and **characterized in that** the dry gas comes from a cryogenic unit (9) that treats as input a CO₂-rich fluid (7) containing more than 50 mol% CO₂.

5. Apparatus according to Claim 4, comprising means for sending at least some of the water (27) cooled in the tower (25) to a chiller where it cools the CO₂-depleted gas upstream of a turbine or air upstream of a dryer, the dried air being intended for a compressor so as to deliver compressed air, possibly to a distillation apparatus.

6. Apparatus according to Claim 4 or 5, comprising means for sending at least some of the water (27) cooled in the tower to a chiller where it cools the gas (1) feeding an adsorption unit (3) or the CO₂-enriched gas (7) leaving an adsorption unit.

## Patentansprüche

1. Verfahren zum Kühlen von Wasser, wobei ein Wasserdurchsatz (23) in einer Austauschsäule von Material und Wärme (25) gekühlt wird, welche im Behälter mit einem Trockengas (13) versorgt wird, wobei das gekühlte Wasser (27) im Behälter der Säule abgezogen wird, wobei das Trockengas arm an CO₂ ist und **dadurch gekennzeichnet, dass** das Trockengas (2) aus einer kryogenen Einheit (9) stammt, welche ein an CO₂ reiches Fluid (7) behandelt, das am Eingang mehr als 50 Mol-% CO₂ enthält.

2. Verfahren nach Anspruch 1, wobei ein Gas (29), enthaltend CO₂, und Wasserdampf im Oberteil der Säule abgezogen werden und mindestens ein Teil des gekühlten Wassers (27) in der Säule zu einer Kühleinrichtung geschickt wird, wo es das an CO₂ arme Gas aufwärts von einer Turbine oder Luft aufwärts von einem Trockner kühlt, wobei die getrocknete Luft für einen Verdichter bestimmt ist, um, soweit erforderlich, einer Destillationsvorrichtung Druckluft bereitzustellen.

3. Verfahren nach Anspruch 1, wobei das an CO₂ reiche Fluid (7) aus einer Adsorptionseinheit (3) stammt, wobei ein Gas (29), enthaltend CO₂, und Wasserdampf im Oberteil der Säule abgezogen werden und mindestens ein Teil des gekühlten Wassers (27) in der Säule zu einer Kühleinrichtung geschickt wird, wo es das Gas (1), das die Adsorptionseinheit versorgt, oder das an CO₂ reiche Gas (7), das die Adsorptionseinheit verlässt oder nach der Verdichtung vor den Trocknern der kryogenen Einheit kühlt.

4. Vorrichtung zum Kühlen von Wasser, umfassend eine Austauschsäule von Material und Wärme (25), die im Behälter mit einem Trockengas (13) und im Oberteil mit einem zu kühlenden Wasserdurchsatz (23) versorgt wird und im Behälter gekühltes Wasser (27) produziert, wobei das Trockengas arm an CO₂ ist und **dadurch gekennzeichnet, dass** das Trockengas (2) aus einer kryogenen Einheit (9) stammt, welche ein an CO₂ reiches Fluid (7) behandelt, das am Eingang mehr als 50 Mol-% CO₂ enthält.

5. Vorrichtung nach Anspruch 4, umfassend Mittel zum Schicken mindestens eines Teils des gekühlten Wassers (27) in der Säule (25) zu einer Kühleinrichtung, wo es das an CO₂ arme Gas aufwärts von einer Turbine oder Luft aufwärts von einem Trockner kühlt, wobei die getrocknete Luft für einen Verdichter bestimmt ist, um, soweit erforderlich, einer Destillationsvorrichtung Druckluft bereitzustellen.

6. Vorrichtung nach Anspruch 4 oder 5, umfassend Mittel zum Schicken mindestens eines Teils des gekühlten Wassers (27) in der Säule zu einer Kühleinrichtung, wo es das Gas (1), das eine Adsorptionseinheit (3) versorgt, oder das an CO₂ reiche Gas (7), das eine Adsorptionseinheit verlässt, kühlt.
